# EUROPÄISCHE PATENTSCHRIFT

(11) **EP 1 108 187 B1**
(45) Veröffentlichungstag und Bekanntmachung des Hinweises auf die Patenterteilung: **17.12.2003**
(21) Anmeldenummer: 99952403.6
(22) Anmeldetag: 17.08.1999
(51) Int. Cl.: F23J 15/04, F23J 15/06

(54) **VERFAHREN UND VORRICHTUNG ZUR VERRINGERUNG DER SCHADSTOFFEMISSION VON HEIZUNGSKLEINANLAGEN**
METHOD AND APPARATUS FOR THE REDUCTION OF POLLUTANT EMISSIONS OF SMALL HEATING SYSTEMS
PROCEDE DE REDUCTION DES REJETS DE MATIERES POLLUANTES DE PETITES INSTALLATIONS DE CHAUFFAGE ET DISPOSITIF UTILISE A CET EFFET

(30) Priorität: 17.08.1998 DE 19837269
(43) Veröffentlichungstag der Anmeldung: 20.06.2001
(73) Patentinhaber: Merkl, Rupert, Dipl.-Ing., 86956 Schongau (DE)
(72) Erfinder: Merkl, Rupert, Dipl.-Ing., 86956 Schongau (DE)
(74) Vertreter: Andres, Angelika Maria
(86) Internationale Anmeldenummer: DE9902551
(87) Internationale Veröffentlichungsnummer: WO00009948

(56) Entgegenhaltungen:
- EP-A- 0 089 036
- DE-A- 3 637 973
- DE-A- 3 901 081
- FR-A- 1 410 100
- US-A- 4 686 940

## Beschreibung

Die Erfindung betrifft ein Verfahren zur Verringerung der Schadstoffemission von Heizungskleinanlagen unter gleichzeitiger Einbeziehung der Brennwertnutzung und die für das Verfahren verwendete Vorrichtung.

Die zulässigen Werte für die Schadstoffemission von Heizungsanlagen wurden durch den Gesetzgeber in den letzten Jahren immer mehr verschärft, um dadurch einen Beitrag zur Verringerung der Umweltbelastung zu erreichen. Bei den von einer Heizungsanlage emitierten Schadstoffen sind in erster Linie die Schwefeloxide und die Stickoxide zu nennen. Daneben ist auch der CO₂-Ausstoß zu beachten. Obwohl CO₂ an sich kein Schadstoff ist, durch seine vermehrte Emission aus Heizungsanlagen aber auch die Umwelt zunehmend belastet, wird es im Sinne dieser Erfindung ebenfalls zu den Schadstoffen gezählt.

Durch gesetzliche Vorschriften werden die zulässigen Grenzwerte für die Schadstoffemission von Heizungsanlagen in den nächsten Jahren weiter drastisch verringert. Insbesondere für viele private Haushalte bedeutet diese Verringerung der zulässigen Grenzwerte der Schadstoffemission von Heizungsanlagen, daß die bestehenden Anlagen vollständig erneuert werden müssen, da derzeit im wesentlichen keine Vorrichtungen auf dem Markt erhältlich sind, mit denen bestehende Heizungsanlagen so ausgestattet werden können, daß sie die zukünftig geltenden gesetzlichen Grenzwerte einzuhalten vermögen. Diese Problematik ist Grundlage für die nachfolgend beschriebene Erfindung für Heizungskleinanlagen. Unter Heizungskleinanlagen werden Heizungsanlagen einer solchen Kapazität verstanden, wie sie in privaten Haushalten oder in Mehrfamilienhäusern bis 150 KW zu finden sind.

Es ist bereits ein Verfahren zur Gaswäsche bekannt, bei dem die Schadstoffe aus dem heißen Abgas durch Einsprühen von Wasser herausgelöst werden. Dieses bekannte Verfahren ist jedoch nur in industriellen Großanlagen anwendbar. Auf Kleinanlagen privater Haushalte und Mehrfamilienhäuser läßt sich diese Form der Gaswäsche nicht ohne weiteres übertragen.

Außerdem ist ein Konzept zur Naßabscheidung von aus Heizungsanlagen emitierten Schadstoffen bekannt, bei dem das aus dem Heizungskessel strömende Abgas zunächst so in ein Wasserbad geleitet wird, daß es in dem Wasser blasenförmig aufsteigen und sich auf die Wassertemperatur von in etwa 40°C abkühlen kann. Dabei wird das Wasserbad durch Zusatz von beispielsweise MgO so eingestellt, daß es einen neutralen pH-Wert aufweist. Durch dieses Verfahren sollen sich die Schwefeloxide und Stickoxide in dem Wasser lösen. Das um die gelösten Schadstoffe entreicherte Abgas wird dann an die Umwelt abgegeben.

Problematisch bei diesem Verfahren ist, daß das aus dem Heizkessel in der Regel mit einer Temperatur von in etwa 150°C - 180°C austretende Abgas in dem Wasserbad auf in etwa 40°C abgekühlt werden soll. Dadurch entstehen erhebliche Probleme bei der Temperaturführung, die die Effektivität der Entfernung der Schadstoffe aus dem Abgas durch Überführung in das Wasserbad vermindert.

Durch die EP 0 768 108 A1 ist eine Vorrichtung zum Entschwefeln von Abgas für industrielle Großanlagen unter gleichzeitiger Einbeziehung der Brennwertnutzung bekannt. Bei dieser bekannten Vorrichtung wird dem Abgas zunächst über einen Wärmetauscher Wärmeenergie entzogen, bevor es mit einer wäßrigen Aufschlemmung von Kalkstein in Kontakt gebracht wird, durch ein Füllmaterial sickert und anschließend in einem Behälter, der ebenfalls die Aufschlemmung von Kalkstein in Wasser enthält, gesammelt wird. Dieser Behälter dient gleichzeitig als Vorratsreservoir für die genannte Aufschlemmung, welche über eine Pumpe zum Abgas gefördert wird. In dem Behälter findet eine Durchmischung mittels einer Rührvorrichtung statt. Dabei reagiert das in dem Abgas enthaltene SO₂ mit dem Kalkstein (CaCO₃) chemisch unter Bildung von Gips (CaSO₄) und CO₂. Das so gereinigte Abgas wird von dem Gips-Wasser-Gemisch getrennt und über einen Absorptionsturm einer Austrittsleitung zugeführt. Weitere Wärmetauscher sind sowohl in dem als Vorratsreservoir und für die Reaktion des SO₂ dienenden Behälter, der mit einer Pumpe versehenen Zuführleitung der Kalkstein-Aufschlemmung zum Abgas und dem Absorptionsturm vorgesehen. Diese aufwendige Reinigungsanlage ist jedoch nur für industrielle Großanlagen geeignet.

Ein weiteres, sich immer dringender stellendes Problem besteht in der Optimierung von Heizungskleinanlagen hinsichtlich ihrer Energiebilanz. Durch ein steigendes Umweltbewußtsein und Bemühen um Kostensenkung steigt der Bedarf an wirtschaftlichen, d. h. hinsichtlich des Energieverbrauchs sparsamen Heizungsanlagen ständig.

Durch die EP-A-0 089 036 ist ein Verfahren zur Reinigung von Abgasen und zur Rückgewinnung von Wärme sowie eine Vorrichtung zur Durchführung dieses Verfahrens bekanntgeworden. Die Vorrichtung weist eine mit einem Heizungskessel verbundene Kammer auf, in welcher das Abgas über einen Wärmetauscher zu einer Sprühvorrichtung geführt wird. Die mittels dieser Sprühvorrichtung erzeugten Tropfen einer Waschflüssigkeit nehmen das Abgas auf und die in dem Abgas enthaltenen Schadstoffe werden zumindest teilweise in den Tropfen gelöst und diese im Rücklauf in einen Speicherbehälter als Vorratskammer für die Waschflüssigkeit geführt. Der Speicherbehälter weist einen Wärmetauscher zur Gewinnung der Wärmeenergie auf.

Der vorliegenden Erfindung lag daher die Aufgabe zugrunde, ein Verfahren und die Verwendung einer Vorrichtung bereitzustellen, die sich speziell auf Kleinanlagen privater Haushalte und/oder Mehrfamilienhäuser beziehen und eine Verringerung der Schadstoffemission von Heizungsanlagen wirkungsvoll und in einem Ausmaß gewährleisten, daß die zukünftig zu erwartenden, strengen gesetzlichen Grenzwerte eingehalten werden können und gleichzeitig eine Optimierung der Brennwertnutzung erfolgt.

Gelöst wird diese Aufgabe durch ein Verfahren, bei dem das Abgas aus dem Heizungskessel in eine Kammer strömt und dort über einen Führungsteil und eine Führungsschiene zwangsgeführt wird, die ringförmige Strömungskanäle bilden und daran anschließend mittels eines weiteren Führungsteils, der einen Ringspalt mit der Wandung der Kammer bildet, in einen Bereich der Kammer zwangsgeleitet wird, wo es in feinverteilten Wassertropfen, die eine geringere Temperatur aufweisen als das Abgas, aufgenommen wird, und die in dem Abgas enthaltenen Schadstoffe zumindest teilweise in den Wassertropfen gelöst, zusammen mit diesen in ein Wasserbad abgeführt und dort über zumindest einen Wärmetauscher geleitet werden, wobei das Wasser des Wasserbades durch den zumindest einen weiteren Wärmetauscher gekühlt wird.

Üblicherweise strömt das Abgas mit einer Temperatur von bis zu etwa 180°C aus dem Heizungskessel und wird unter Ausnutzung seiner Wärmeenergie über den zunächst in der Kammer angeordneten Wärmetauscher geleitet. Durch diesen Wärmetauscher wird das Abgas bis auf etwa 100°C abgekühlt. Dadurch wird das Wasser des Wasserbades nicht unnötig aufgeheizt. Die so gewonnene Wärmeenergie kann abgeführt und im Heizungskreislauf, bei der Brauchwassererwärmung oder anderweitig auf einem hohen Niveau genutzt werden.

Das Abgas trifft dann auf die feinverteilten Wassertropfen einer Größe von etwa 250 um, die die in dem Abgas enthaltenen Schadstoffe zumindest teilweise lösen. Da die feinverteilten Wassertropfen eine Temperatur aufweisen, die geringer ist als die des Abgases, trifft das immer noch heiße Abgas auf die relativ dazu kühleren Wassertropfen und wird schockartig abgekühlt. Die feinverteilten Wassertropfen bewirken, daß insgesamt eine sehr große Oberfläche zur Verfügung steht, auf die das mit den Schadstoffen belastete Abgas trifft. Aufgrund des Temperaturunterschiedes werden dann die Schadstoffe aus dem Abgas beim Treffen auf die feinverteilten Wassertropfen schockartig aus dem Abgas heraus in die Wassertropfen übergeführt. Dieses schockartige Zusammentreffen des Abgases mit den eine sehr große Oberfläche bereitstellenden kühlen Wassertropfen bewirkt eine sehr große Wirksamkeit bei der Verminderung des Schadstoffgehaltes des Abgases. Der Taupunkt wird dadurch unterschritten. Die in den Wassertropfen gelösten Schadstoffe und das durch die Taupunktunterschreitung ausgefallene Kondensat des Rauchgases können dann zusammen in das Wasserbad abgeführt werden. Der darin befindliche Wärmetauscher ist ein für das erfolgreiche Durchführen der Gaswäsche in der Kammer erforderliches Element. Es ist vorgesehen, daß dieser Wärmetauscher das Kaltwasser zur Boilereinspeisung im Brauchwasserkreislauf des Heizungssystems führt. Wenn über den Boiler Wasser entnommen wird, gewährleistet der Wärmetauscher eine Auskühlung des Wasserbades auf etwa 10 - 30° C. Es wird eine Temperatur erreicht, die nach dem Einsprühen des Wassers des Wasserbades als feinverteilte Wassertropfen ausreicht, um den Taupunkt des Abgases zu unterschreiten, ein Lösen der Schadstoffe zu gewährleisten und das Kondensat auszufällen. Dadurch wird es möglich, sowohl bei Altanlagen mit hohen Rücklauftemperaturen als auch bei allen anderen Anlagen selbst im Sommer mit der Brauchwasserbereitung ein Auskondensieren des Rauchgases, d. h. des Abgases der Heizungsanlage, zu erreichen. Gleichzeitig wird das Kaltwasser für die Boilereinspeisung vorerwärmt und dadurch Energie gespart. Es wird ein nur über das Brauchwasser sich selbstregelndes System geschaffen, das ohne weitere Hilfsenergie auskommt. Vorraussetzung ist lediglich ein ausreichend großer Vorrat an Kühlwasser im Kondensat oder Vorratsbehälter.

Grundsätzlich ist es erforderlich, die Temperatur des Wasserbades über die Auskühlung durch den Wärmetauscher so niedrig wie möglich zu halten, um über das erneute Einsprühen des Wassers des Wasserbades in die Kammer eine Abgaskondensation (Brennwertnutzung) zu erreichen. Wenn beispielsweise etwa 100 l Warmwasser pro Tag in einem Wohnhaus abgezapft werden, kann der Wärmetauscher des Wasserbades einen Wasserbadinhalt von etwa 50 l auf ungefähr 20° C auskühlen.

In einer bevorzugten Ausführungsform des erfindungsgemäßen Verfahrens wird das Abgas über den Führungsteil und die Führungsschiene zwangsgeführt, um einen Wärmetauscher zu passieren, wobei das Kondensat ohne Kontakt mit dem zumindest einen Wärmetauscher der Kammer in das Wasserbad abgeführt wird. Dadurch ergeben sich weitere Vorteile des erfindungsgemäßen Verfahrens. Zum einen besteht das Problem, daß Schwermetalle aus dem Edelmetall ausgeschieden werden, Kondensat die Oberfläche des Wärmetauschers kühlen beziehungsweise sich daran unnötig erwärmen würde.

In einer weiteren bevorzugten Ausführungsform des erfindungsgemäßen Verfahrens werden die feinverteilten Wassertropfen durch eine Sprühanlage mit zumindest einer Düse erzeugt. Es kann auch eine Mehrzahl von Düsen in der Kammer angeordnet sein.

Die feinverteilten Wassertropfen können beim Austritt aus der oder den Düsen der Sprühanlage eine Temperatur von etwa 50° C aufweisen, wenn es sich um Gasanlagen handelt. Sie können eine Temperatur von vorzugsweise etwa 40° C bei Ölanlagen aufweisen, um eine Abgaskondensation bewirken zu können. Besonders bevorzugt beträgt die Temperatur der feinverteilten Wassertropfen jedoch bei beiden Anlagetypen etwa 20° C. Das Wasserbad kann zur Unterstützung des ersten Wärmetauschers des Wasserbades bei Anlagen mit niedrigen Rücklauftemperaturen einen weiteren Wärmetauscher aufweisen.

Durch die Zuführung von schwefelsauren Ionen aus dem Abgas in das Wasserbad wird der pH auf Werte unter 4 gesenkt. Um dies zu vermeiden, werden dem Wasserbad Mittel zur Einstellung des pH-Wertes und, wenn gewünscht, gleichzeitig zur Entfernung der in dem Wasserbad gelösten Schadstoffe zugesetzt, die ausgewählt sind aus der Gruppe bestehend aus anorganischen Salzen, Peroxiden und Komplexbildnern. Die Mittel aus dem Bereich der anorganischen Salze dienen zur Regulierung des pH-Wertes. Hier ist insbesondere auf Magnesiumoxid hinzuweisen, das sich zur Regulierung des pH-Wertes in solchen Fällen bewährt hat. Peroxide können zugesetzt werden, um zugeführte Stickoxide, wie NO zu oxidieren. Auf der anderen Seite kann NO aber auch durch zugesetzte Komplexbildner reduziert werden. Die dem Fachmann hierfür zur Verfügung stehenden anorganischen Salze, Peroxide und Komplexbildner sind im Stand der Technik an sich bekannt, so daß im Rahmen dieser Erfindung darauf nicht näher eingegangen wird.

Die Erfindung betrifft außerdem eine Vorrichtung zur Verringerung der Schadstoffemission der Abgase von Heizungskleinanlagen unter gleichzeitiger Einbeziehung der Brennwertnutzung, die eine mit dem Heizungskessel verbundene Kammer aufweist, einen Führungsteil und eine Führungsschiene zur Ausbildung definierter ringförmiger Strömungskanäle für das Abgas und einen weiteren Führungsteil, der einen Ringspalt mit der Wandung der Kammer bildet, wobei der Führungsteil die Führungsschiene und der weitere Führungsteil zusammen eine Zwangsführung ausbilden, um das Abgas über den Wärmetauscher zu der Anlage zur Erzeugung fein verteilter Wassertropfen zu leiten und einer Öffnung, über welche die Kammer mit einem Wasserbad verbunden ist, in dem zumindest ein weiterer Wärmetauscher zum Kühlen des Wasserbades angeordnet ist.

Die Vorrichtung kann eine Zuführleitung aufweisen, die die Anlage zur Erzeugung feinverteilter Wassertropfen der Kammer mit dem Wasser des Wasserbades speist.

Die in der Kammer vorgesehene Führung kann zusätzlich dazu dienen, das Kondensat aus den Wassertropfen und den darin gelösten Schadstoffen ohne Kontakt mit dem zumindest einen Wärmetauscher der Kammer zu der Öffnung zu leiten. Der Begriff Führung ist in diesem Zusammenhang allgemein zu verstehen und umfaßt auch eine Führung, die beispielsweise aus zumindest zwei zusammenwirkenden Führungselementen bestehen kann.

Zur Unterstützung des ersten Wärmetauschers kann das Wasserbad vorzugsweise einen weiteren Wärmetauscher aufweisen.

Eine weitere erfindungsgemäße Abwandlung der Vorrichtung betrifft den Boden der Kammer. Dort befindet sich die Öffnung, über welche die Kammer mit einem Wasserbad verbunden ist, wobei der Boden der Kammer eine Neigung aufweist. Durch die Neigung des Bodens kann sich möglicherweise am Boden der Kammer absetzender Schlamm in Richtung auf die Öffnung fließen, wodurch ein Verschlammen des Kammerbodens mit der Gefahr eines Verstopfens der Öffnung wirksam vermieden wird. Erforderlich wird eine solche Maßnahme insbesondere dann, wenn in der Heizungsanlage des jeweiligen privaten Haushalts ein Holzkessel, versehen mit einem Ventil für die Abschwefelung, zum Einsatz kommt.

Die Zuführleitung, die die Anlage zur Erzeugung feinverteilter Wassertropfen der Kammer mit dem Wasser des Wasserbades speist, kann zusätzlich eine Fördereinrichtung aufweisen. Die Fördereinrichtung kann eine Pumpeinrichtung sein, die die Anlage zur Erzeugung der fein verteilten Wassertropfen der Kammer mit dem Wasser des Wasserbades speist. Durch die Fördereinrichtung wird die sehr ökonomische Verwertung des eingesetzten Wassers ermöglicht, daß im Kreislauf vom Wasserbad in die Kammer und zurück geführt wird.

Ein besonderer Vorteil der erfindungsgemäßen Vorrichtung besteht darin, daß jede Heizungsanlage damit ohne größeren Aufwand ausgerüstet werden kann und es so möglich wird, auch die strengen Maßstäbe der nächsten Jahre zu erfüllen, ohne eine neue Heizungsanlage installieren zu müssen. Gleichzeitig wird die Brennwertnutzung einbezogen und eine Anlage zur Verfügung gestellt, die ohne größeren Aufwand oder größere Umrüstung sehr wirtschaftlich arbeitet.

Die Vorrichtung kann selbstverständlich auch bei der Neukonstruktion von Heizungskesseln direkt oder indirekt integriert werden.

Im folgenden soll die Erfindung anhand eines in der Zeichnung dargestellten Ausführungsbeispieles näher erläutert werden.

Es zeigen:
- Fig. 1:: eine schematische Gesamtansicht der erfindungsgemäß verwendeten Vorrichtung zur Verringerung der Schadstoffemission von Heizungskleinanlagen,
- Fig. 2:: einen Ausschnitt aus der erfindungsgemäß verwendeten Vorrichtung, der die Kammer darstellt.

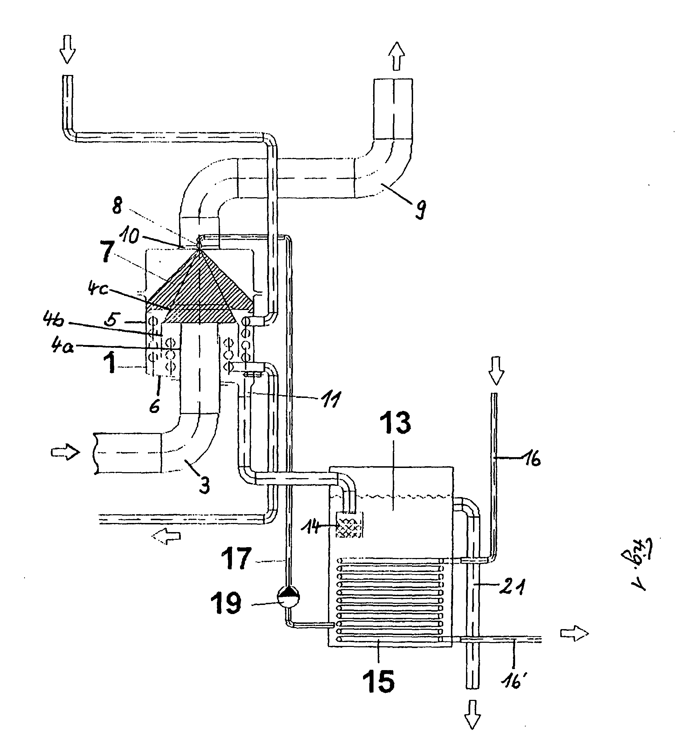

In Fig. 1 ist die erfindungsgemäß verwendete Vorrichtung zur Verringerung der Schadstoffemission von Heizungsanlagen gezeigt, die eine einfache und kostengünstige Anlage darstellt, die vorteilhafterweise bei allen Rücklauftemperaturen vorgesehen werden kann. Die Anlage weist eine Kammer 1 auf, die mit einem Einlaßrohr 3 versehen ist, durch welches Abgas, wie durch einen Pfeil angedeutet, aus einer nicht näher durgestellten Heizungsanlage in die Kammer 1 strömt. Das so in die Kammer 1 strömende Abgas wird über eine Führung 4a, 4b, 4c in Richtung auf einen Wärmetauscher 5 aus Edelstahl geleitet. Die insgesamt mit den Bezugsziffern 4a, 4b, 4c bezeichnete Führung ist mehrteilig ausgestaltet. Ein mit 4a Teil bezeichnetes Teil der Führung bildet zunächst mit dem Einlaßrohr 3 einen Einströmkonus von 3 bis 10 mm Abstand in Form eines Ringspaltes. Das durch diesen Ringspalt strömende heiße Abgas wird dann mittels einer weiteren, mit dem ersten Führungsteil zusammenwirkenden Führungsschiene 4b umgelenkt. Diese Führungsschiene 4b bildet zusammen mit dem Einlaßrohr 3 und dem Führungsteil 4a einen ringförmigen Strömungskanal, in dem das Abgas über den Wärmetauscher 5 strömt. Der so gebildete Strömungskanal öffnet sich in Richtung auf den Boden 6 der Kammer 1 und der Abgasstrom wird mittels des Bodens 6 erneut umgelenkt, um wieder über einen weiteren Teil des Wärmetauschers 5 in Richtung auf den oberen Teil der Kammer 1 zu strömen. Dort trifft der Abgasstrom auf einen weiteren Führungsteil 4c, der erneut einen Ausströmkonus bildet, durch den das Abgas in den oberen Teil der Kammer 1 geleitet wird. Durch diese Art der Zwangsführung wird gewährleistet, daß das Abgas einen definierten Weg zurücklegt und außerdem wird ein inniger Kontakt zwischen dem Wärmetauscher 5 und dem Abgas hergestellt.

Nachdem das durch den Wärmetauscher 5 auf etwa 100°C abgekühlte Abgas das weitere Führungsteil 4c passiert hat, trifft es auf einen Nebel von feinverteilten Wassertropfen 7, der durch eine Anlage 8 mittels einer Düse -im folgenden kurz Sprühanlage 8 genannt- erzeugt wird. Die Anlage oder Sprühanlage 8 ist etwa mittig im oberen Bereich der Kammer 1 angeordnet und von dem weiteren Führungsteil 4c in der Weise beabstandet, daß der aus der Anlage 8 gesprühte Wassertropfennebel 7 sich im Bereich des Führungsteils 4c über die gesamte Breite der Kammer 1 verteilen kann.

Beim Austritt aus der Düse der Sprühanlage 8 weisen die feinverteilten Wassertropfen etwa eine Temperatur von 20 - 40°C, maximal von 50°C auf, Der feinverteilte Wassertropfennebel 7 stellt eine sehr große Oberfläche bereit, die es ermöglicht, bei dem schockartigen Zusammentreffen des trotz des ersten Wärmetauschers 5 noch ausreichend heißen Abgases mit dem relativ dazu kalten Wassertropfennebel 7 ein sehr wirksames Herauslösen der Schadstoffanteile des Heizgases in die Wassertropfen zu bewirken.

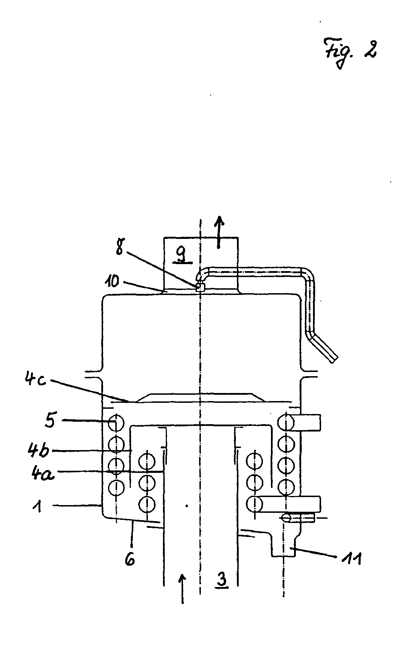

Die so beladenen Wassertropfen des Wassertropfennebels 7 fließen zurück durch den Ringspalt, der durch das Führungsteil 4c gebildet wird und weiter entlang der Wandung der Kammer 1, ohne in Kontakt mit dem Wärmetauscher 5 zu kommen und sammeln sich je nach Anordnung der Kammer 1 an einer durch die Schwerkraft bestimmten Stelle, die bei der in den Fig. 1 und 2 angegebenen Anordnung durch die tiefste Stelle des eine Neigung aufweisenden Bodens 6 der Kammer 1 gebildet wird.

Das so von den Schadstoffen zumindest zu einem großen Teil befreite Abgas wird über Auslaß 9 an die Atmosphäre abgegeben. Ein Tropfenabscheider 10 sorgt dabei für das vollständige Abscheiden der feinverteilten Wassertropfen. Die sich an der tiefsten Stelle der Kammer 1 sammelnden Wassertropfen werden über den Abfluß 11 zu einem Wasserbad 13 geleitet.

Um den gegebenenfalls starksauren Niederschlag des Wassertropfennebels aus Kammer 1 neutralisieren zu können, wurde dem Wasserbad 13 MgO in einem Behälter 14 zugesetzt, den die Wassertropfen passieren. Der Niederschlag aus dem Wassertropfennebel 7 der Kammer 1, der durch das heiße Abgas erwärmt wurde, weist in etwa eine Temperatur von 30°C - 50°C auf. Ein in dem Wasserbad angeordneter Wärmetauscher 15 dient der Abkühlung des Wasserbades 13, damit eine Temperatur erreicht wird, die es für ein erneutes Verwenden als feinverteilter Wassertropfennebel in der Kammer 1 geeignet macht. Der Wärmetauscher 15 dient dazu, das Kaltwasser zur Boilereinspeisung bei der Brauchwassererwärmung zu führen. Dies ist in Fig. 1 nicht näher dargestellt, sondern nur über die Leitungen 16' und 16" angedeutet.

Über eine Zuführleitung 17, die eine Pumpeinrichtung 19 aufweist und vom Wasserbad 13 zur Kammer 1 führt, wird das Wasser des Wasserbades 13 erneut der Sprühanlage 8 zugeführt. Außerdem ist eine Leitung 21 zum Abführen von überschüssigem Wasser des Wasserbades 13 vorgesehen.

Eine in den Fig. 1) und 2) nicht mehr dargestellte Abwandlung der erfindungsgemäß verwendeten Vorrichtung, die insbesondere für Anlagen mit niedrigen Rücklauftemperaturen und niedrigen Abgastemperaturen geeignet ist, besteht darin, daß im Wasserbad 13 zur Unterstützung des ersten Wärmetauschers 15 ein weiterer Wärmetauscher angeordnet ist.

Sowohl die Kammer 1 als auch das Gehäuse des Wasserbades 13 sind aus säurefestem Kunststoff gefertigt. Auch die Sprühanlage 8 besteht aus säurefestem Kunststoff. Es ist aber nicht zwangsläufig erforderlich, säurefesten Kunststoff zu verwenden. Auch jedes geeignete andere Material, wie beispielsweise säurefestes Metall, kann verwendet werden. Dabei ist es beispielsweise empfehlenswert, das säurefeste Metall im vorderen Hochtemperaturbereich der Kammer 1 vorzusehen.

Die Anordnung der Kammer 1 und des Wasserbades 13, sowohl zueinander als auch relativ zu der Heizungsanlage ist nicht auf die in den Figuren 1) und 2) beschriebene Anordnung beschränkt. Kammer 1 und Wasserbad 13 können auch als Einheit ausgebildet werden.

## Patentansprüche

1. Verfahren zur Verringerung der Schadstoffemission der Abgase von Heizungskleinanlagen unter gleichzeitiger Einbeziehung der Brennwertnutzung, bei dem das Abgas aus dem Heizungskessel in eine Kammer (1) strömt und dort über einen Führungsteil (4a) und eine Führungsschiene (4b) zwangsgeführt wird, die ringförmige Strömungskanäle bilden und daran anschließend mittels eines weiteren Führungsteils (4c), der einen Ringspalt mit der Wandung der Kammer (1) bildet, in einen Bereich der Kammer (1) zwangsgeleitet wird, wo es in feinverteilten Wassertropfen (7), die eine geringere Temperatur aufweisen als das Abgas, aufgenommen wird, und die in dem Abgas enthaltenen Schadstoffe zumindest teilweise in den Wassertropfen (7) gelöst, zusammen mit diesen in ein Wasserbad (13) abgeführt und dort über zumindest einen Wärmetauscher (15) geleitet werden, wobei das Wasser des Wasserbades (13) durch den zumindest einen weiteren Wärmetauscher (15) gekühlt wird.

2. Verfahren nach Anspruch 1, **dadurch gekennzeichnet, daß** das Wasser des Wasserbades (13) erneut zur Bildung der Wassertropfen (7) der Kammer (1) dient.

3. Verfahren nach Anspruch 1 oder 2, **dadurch gekennzeichnet, daß** das Abgas über den Führungsteil (4a) und die Führungsschiene (4b) zwangsgeführt wird, um einen Wärmetauscher (5) zu passieren und daß das Kondensat ohne Kontakt mit dem Wärmetauscher (5) der Kammer (1) in das Wasserbad (13) abgeführt wird.

4. Verfahren nach einem der Ansprüche 1 bis 3, **dadurch gekennzeichnet, daß** die feinverteilten Wassertropfen (7) durch eine Sprühanlage (8) mit zumindest einer Düse erzeugt werden.

5. Verfahren nach Anspruch 4, **dadurch gekennzeichnet, daß** die feinverteilten Wassertropfen beim Austritt aus der oder den Düsen eine Temperatur von weniger als 50°C, vorzugsweise 40°C, besonders bevorzugt 20°C aufweisen.

6. Verfahren nach einem der Ansprüche 1 bis 5, **dadurch gekennzeichnet, daß** dem Wasserbad (13) Mittel zur Einstellung des pH-Wertes und/oder zur Entfernung der in dem Wasserbad (13) gelösten Schadstoffe zugesetzt werden, die ausgewählt sind aus der Gruppe bestehend aus anorganischen Salzen, Peroxiden und Komplexbildnern.

7. Vorrichtung zur Verringerung der Schadstoffemission der Abgase von Heizungskleinanlagen unter gleichzeitiger Einbeziehung der Brennwertnutzung, die eine mit dem Heizungskessel verbundene Kammer (1) aufweist, einen Führungsteil (4a) und eine Führungsschiene (4b) zur Ausbildung definierter ringförmiger Strömungskanäle für das Abgas und einen weiteren Führungsteil (4c), der einen Ringspalt mit der Wandung der Kammer (1) bildet, wobei der Führungsteil (4a) die Führungsschiene (4b) und der weitere Führungsteil (4c) zusammen eine Zwangsfahrung ausbilden, um das Abgas über den Wärmetauscher (5) zu der Anlage (8) zur Erzeugung fein verteilter Wassertropfen zu leiten und einer Öffnung (11), über welche die Kammer (1) mit einem Wasserbad (13) verbunden ist, in dem zumindest ein weiterer Wärmetauscher (15) zum Kühlen des Wasserbades (13) angeordnet ist

8. Vorrichtung nach Anspruch 7, **dadurch gekennzeichnet, daß** die Vorrichtung eine Zuführleitung (17) aufweist, die die Anlage (8) zur Erzeugung feinverteilter Wassertropfen der Kammer (1) mit dem Wasser des Wasserbades (13) speist.

9. Vorrichtung nach Anspruch 7 oder 8, **dadurch gekennzeichnet, daß** der weitere Führungteil (4c) zusätzlich dazu dient, das Kondensat aus den Wassertropfen (7) und den darin gelösten Schadstoffen ohne Kontakt mit dem zumindest einen Wärmetauscher (5) der Kammer (1) zu der Öffnung (11) zu leiten.

10. Vorrichtung nach einem der Ansprüche 7 bis 9, **dadurch gekennzeichnet, daß** die Öffnung (11) im Boden der Kammer (1) angeordnet ist und der Boden eine Neigung aufweist.

11. Vorrichtung nach einem der Ansprüche 7 bis 10, **dadurch gekennzeichnet, daß** die Zuführleitung (17) zusätzlich eine Fördereinrichtung (19) aufweist.

## Claims

1. Procedure to reduce the emission of pollutants in the exhaust fumes of small heating facilities at the same time taking into account the utilization of the useful output where the exhaust fumes from the boiler flow into a chamber (1) and are then forced through a guiding element (4a) and a guide rail (4b) which forms ring shaped flow channels and then are forced through another guiding element (4c), which forms an annular gap with the wall of the chamber (1), and into an area of the chamber (1) where they are received by finely distributed water droplets (7) which have a lower temperature than the exhaust fumes and a proportion of the pollutants contained in the exhaust fumes are dissolved in the water droplets (7) which is then passed into a water bath (13) and through at least one heat exchanger (15) whereby the water of the water bath (13) is cooled by at least one additional heat exchanger (15).

2. Procedure according to claim 1, **characterized by** the fact that the water in the water bath (13) is used again for the formation of the water droplets (7) in chamber (1).

3. Procedure according to claims 1 and 2 **characterized by** the fact that the exhaust fumes are forced through the guiding element (4a) and the guide track (4b) in order to pass through a heat exchanger (5) and that the condensate is transported into the water bath (13) without coming into contact with the heat exchanger (5) of chamber (1).

4. Procedure according to claims 1 to 3 **characterized by** the fact that the finely distributed water drops (7) are generated with a spraying system (8) using at least one nozzle.

5. Procedure according to claim 4, **characterized by** the fact that the finely distributed water droplets have a temperature of less than 50°C or preferably 40°C or ideally 20°C when they exit the nozzle(s).

6. Procedure according to claims 1 to 5 **characterized by** the fact that agents, which adjust the pH value and / or which remove the pollutants dissolved in the water bath are added to the water bath (13) and which have been selected from the group consisting of inorganic salts, peroxides and agents forming complexes.

7. Device to reduce the emission of pollutants from exhaust fumes from small heating facilities at the same time taking into account the utilization of the useful output whereby the device has a chamber (1) connected to the boiler, a guiding element (4a) and a guide rail (4b) to form defined flow channels for the exhaust fumes and an additional guiding element (4c) which forms an annular gap with the wall of the chamber (1) whereby the guiding element (4a), the guide rail (4b) and an additional guiding element (4c) together form a forced direction of flow in order to direct the exhaust fumes over the heat exchanger (5) to the system (8) to generate finely distributed water droplets and an opening (11) which connects the chamber (1) to a water bath (13) which contains at least one additional heat exchanger (15) to cool the water bath (13).

8. Device according to claim 7, **characterized by** the fact that the device has a supply line (17) which feeds the system (8) to generate finely distributed water drops of chamber (1) with the water of the water bath (13).

9. Device according to claims 7 or 8, **characterized by** the fact that the additional guiding element (4c) also serves to guide the condensate from the water drops (7) and the pollutants dissolved therein to the opening (11 ) without coming into contact with the one (or more) heat exchanger(s) (5) in the chamber (1 ).

10. Device according to one of the claims 7 to 9 **characterized by** the fact that the opening (11) is situated in the floor of the chamber (11) and the floor is at an angle.

11. Device according to one of claims 7 to 10 **characterized by** the fact that the supply line (17) also includes a transport device (19):

## Revendications

1. Procédé en vue de réduire l'émission de substances nocives des gaz d'échappement des petites installations de chauffage en utilisant en même temps le pouvoir calorifique, les gaz d'échappement s'écoulant de la chaudière de chauffage dans une chambre (1) et qui là, sont guidés par l'intermédiaire d'une pièce de guidage (4a) et d'un rail de guidage (4b) qui constituent des canaux d'écoulement circulaires et qui ensuite sont amenés dans une zone de la chambre (1) par une autre pièce de guidage (4c), qui constitue un interstice annulaire avec la paroi de la chambre (1), où il y a absorption dans dès gouttes d'eau (7) finement réparties d'une température plus basse que les gaz d'échappement, les substances nocives contenues dans les gaz d'échappement, dissoutes du moins en partie dans les gouttes d'eau (7) sont amenées avec ceux-ci dans un bain d'eau (13) et y sont dirigés vers au moins un échangeur thermique, l'eau du bain d'eau (13) étant refroidie par au moins un autre échangeur thermique (15).

2. Procédé selon la revendication 1, **caractérisé en ce que** l'eau du bain d'eau (13) sert à nouveau à constituer les gouttes d'eau (7) de la chambre (1).

3. Procédé selon la revendication 1 ou 2, **caractérisé en ce que** les gaz d'échappement sont guidés par la pièce de guidage (4a) et le rail de guidage (4b) pour traverser un échangeur thermique (5) et que le condensat est évacué dans le bain d'eau (13) sans contact avec l'échangeur thermique (5) de la chambre (1).

4. Procédé selon l'une des revendications 1 à 3, **caractérisé en ce que** les gouttes d'eau (7) finement réparties sont produites par une installation de pulvérisation (8) avec au moins une buse.

5. Procédé selon la revendication 4, **caractérisé en ce qu'**à la sortie de la ou des buses, les gouttes d'eau finement réparties ont une température inférieure à 50°C, de préférence 40°C, et encore mieux de 20°C.

6. Procédé selon l'une des revendications 1 à 5, **caractérisé en ce que** des agents sont ajoutés au bain d'eau (13) pour régler la valeur pH et/ou pour éliminer les substances nocives dissoutes dans le bain d'eau (13), lesquels sont sélectionnés dans le groupe composé de sels inorganiques, de peroxydes et d'agents complexants.

7. Dispositif en vue de réduire les émissions de substances nocives des gaz d'échappement des petites installations de chauffage en y incluant l'utilisation de la valeur calorique, lequel présente une chambre (1) reliée à la chaudière de chauffage, une pièce de guidage (4a) et un rail de guidage (4b) pour la constitution de canaux d'écoulement annulaires définis pour les gaz d'échappement et une autre pièce de guidage (4c) qui constitue une fente annulaire avec la paroi de la chambre (1 ), la pièce de guidage (4a), le rail de guidage (4b) et l'autre pièce de guidage (4c) constituant un guidage forcé pour diriger les gaz d'échappement vers l'installation (8) de production de gouttes d'eau finement réparties par l'intermédiaire de l'échangeur thermique (5) et une ouverture (11) par laquelle la chambre (1) est reliée à un bain d'eau (13) dans lequel au moins un autre échangeur thermique (15) est disposé pour refroidir le bain d'eau.

8. Dispositif selon la revendication 7, **caractérisé en ce que** le dispositif présente une conduite d'amenée (17) qui alimente l'installation (8) en eau du bain d'eau (13) en vue de la production de gouttes d'eau finement réparties de la chambre (1 ).

9. Dispositif selon la revendication 7 ou 8, **caractérisé en ce que** l'autre pièce de guidage (4c) sert en plus à amener le condensat des gouttes d'eau (7) et des substances nocives qui y sont dissoutes, vers l'ouverture (11 ) sans contact avec au moins un échangeur thermique (5) de la chambre (1 ).

10. Dispositif selon l'une des revendications 7 à 9, **caractérisé en que** l'ouverture (11) est disposée dans le fond de la chambre (1) et que ce fond est incliné.

11. Dispositif selon l'une des revendications 7 à 10, **caractérisé en que** la conduite d'amenée (17) présente en plus un dispositif de transport (19).
